# EUROPEAN PATENT SPECIFICATION

(11) **EP 2 418 410 B1**
(45) Date of publication and mention of the grant of the patent: **26.03.2014**
(21) Application number: 10172414.4
(22) Date of filing: 10.08.2010
(51) Int. Cl.: E04G 15/06, F16L 5/10, H02G 3/22, F16L 5/04, F16L 21/00

(54) **System for embedding a sealable conduit for ducting a tube or cable in a wall or floor which is to be produced by a casting process and method for embedding such a conduit**
System zur Einbettung eines abdichtbaren Kanals als Rohr- oder Kabelführung in einer Wand oder einem Boden, der mittels Gussverfahren hergestellt wird, und Verfahren zur Einbettung eines solchen Kanals
Système d'insertion d'un conduit scellable pour la conduction d'un tube ou câble dans un mur ou plancher qui doit se produire par un processus de moulage et procédé pour insérer un tel conduit

(43) Date of publication of application: 15.02.2012
(60) Divisional application: 13192128.0
(73) Proprietor: Beele Engineering B.V., 7122 NZ Aalten (NL)
(72) Inventor: Beele, Johannes Alfred, 7122, NZ Aalten (NL)
(74) Representative: HOFFMANN EITLE

(56) References cited:
- EP-A1- 0 481 872
- US-A1- 2010 133 804

## Description

The invention is related to a system for embedding a sealable conduit for ducting a tube or cable in a wall or floor which is to be produced by a casting process. Often, such a system comprises nothing more than a plastic pipe which is positioned in formwork prepared for receiving the concrete slurry that will harden into a wall or floor. The slurry is often concrete slurry so that the wall or floor to be produced is often a concrete wall or a concrete floor.

Such a plastic pipe is often cut to size by a relatively roughly operating machining instrument, such as a saw, which leaves lots of curbs and other irregularities at the rim of the pipe. Often, these activities take place at a construction site where also the presence of sand and/or other abrasive particles can contribute to the formation of such irregularities, even if the machining equipment used is itself dedicated to precise tooling.

After ducting a tube or a cable, a multitude of tubes or cables, or a combination of duct(s) and cable(s), at the end of the pipe the remaining space is sealed off by insertion of a sealing device, such as a rubber plug having suitable dimensions for sealing that space. The sealing device is often a multi-plug, i.e. formed by two or more segments. Examples of such a plug are disclosed in EP 1 634 006, EP 1 902 241 and EP 2 005 051. Such plugs are usually made of high-quality rubber, preferably silicon-based. Although such rubber may have a hardness shore A of around 72 degrees, curbs and/or other irregularities left at the rim of the plastic pipe may damage parts of the outer circumference of the plug and as such prejudice the sealing integrity of the plug.

In the field of concern, it is desirable to have a system which can replace the pipe referred to above, simply on the basis of the cross-sectional dimensions of that pipe, so as to ensure that the sealing plugs can be inserted with a low risk, if at all, that such insertion would damage the plug and adversely affect the sealing integrity.

It is an object of the invention to meet such a need.

The object of the invention is achieved by providing a system according to claim 1 for embedding a sealable conduit for ducting a tube or cable in a wall or floor which is to be produced by a casting process. The system comprises at least one pipe-inlet having a smooth inlet-end for receiving a sealing device and a coupling-end for fittingly coupling to a pipe by insertion of the coupling-end into the pipe. The inner cross-sectional dimensions of the inlet-end corresponds to the outer cross- sectional dimensions of the coupling-end for coupling to a pipe having the same inner cross-sectional dimensions as the inlet-end. Consequently, it is possible to use a plastic pipe as used before, now cut off to a suitable length, so that after insertion of the coupling-end into the pipe, an irregularly formed rim or a rim having curbs at the end of the pipe is at the outside of the coupling-end. The plug can ultimately without problems be inserted in the pipe-inlet which has a smooth inlet-end. The plug does not have to be forced along an irregularly formed end of the pipe, but will instead be forced along the smooth inlet-end of the pipe-inlet and has thus a much higher chance of keeping its outer surfaces undamaged, favouring maintenance of the sealing integrity. In most cases, the cross-sectional dimensions referred to above will correspond to the respective diameters of the inlet-end (internally), the coupling end (externally) and the pipe (internally).

In an embodiment of a system according to the invention, the coupling-end is provided with an annular contact surface for fittingly receiving there against an annular inner surface of the pipe, the annular contact surface being smooth compared with an outer surface of the inlet-end. This allows for a good fit of the pipe against the coupling-end of the pipe-inlet, so that the transition from the pipe-inlet to the pipe is of a quality which can correspond to the quality of a coupling-end connected to a pipe by means of an integral connection. Within this context, the term "annular" is not necessarily limited to circular in shape. The term "annular surface" is thus also understood to embrace, for instance, a surface which is closed in itself, and, for instance, forming an angular shape with rounded-off edges.

In an embodiment of a system according to the invention, the inlet-end of the pipe-inlet is provided with an inner surface which is smooth compared with an outer surface of the inlet-end. A smooth inner surface facilitates the insertion of the sealing device not only in that the insertion can occur in a relatively fast way, but also in a way that the outer surface of the sealing device remains undamaged.

In an embodiment of a system according to the invention, the coupling-end is provided with a stopper for defining the maximum overlap in an axial direction between the coupling-end and a pipe into "which the coupling-end is inserted. This allows for accurate dimensioning of the pipe, so as to end up with a sealable conduit that matches the thickness of the wall or floor in which it is embedded.

In an embodiment of a system according to the invention, the inlet-end of the pipe-inlet has a cylindrical cross section. This means that over the length along which the sealing device is inserted in the inlet-end of the pipe-inlet, the pressure of the sealing device against the inner surface of the pipe-inlet is independent on the position along the length of the pipe-inlet, providing optimal sealing.

In an embodiment of a system according to the invention, the inlet-end of the pipe-inlet has a rim which is rounded off at an inside of the rim. This ensures that the rim offers self-centring when the sealing device is inserted in the pipe-inlet. Furthermore, the rim has no sharp edges which could somehow form a undesired imprint on the sealing device. The sealing device will therefore remain free from irregularities which could adversely affect the sealing integrity.

In an embodiment of a system according to the invention, the inlet-end of the pipe-inlet is internally provided with a shoulder for inhibiting insertion of a sealing device too deep into the pipe-inlet. This dimensioning of the inlet-end recess can thus be well-matched with the dimensions of the sealing device, so that the sealing device is not unnecessarily strained or disadvantageously compressed. This prolongs the serving time of the sealing device. In general, the sealing devices will comprise a rubber plug composed of two or more segmental parts so as to allow for sealing an annularly shaped space. Having all the segmented parts "resting" against the shoulders, also allows for good alignment of these parts, favouring good sealing. Furthermore, the position of the shoulder can be chosen such that the sealing device cannot be inserted too deeply. A hammer used for inserting the sealing device will therefore not directly exert force onto the rim of the inlet-end.

In an embodiment of a system according to the invention, the shoulder coincides with the transition from the inlet-end to the coupling-end. This results in a pipe-inlet having a strong structure, which is important as the pipe-inlet will be subjected to castable material that will impact on the pipe-inlet during the casting of the wall or floor in the formwork. This is also important to resist the forces to which the inlet-pipe is subjected when the casted material is set to vibrate to ensure that the density (and strength) increases. Furthermore, the enhanced stiffness will prevent bending of the inlet-pipe.

In an embodiment of a system according to the invention, the pipe-inlet is externally provided with rib or flange which extends in a transverse direction of the pipe-inlet for locking the pipe-inlet in the wall or floor. This allows for mechanical keying, or anchoring, of the sealable conduit once embedded in the wall or floor. In this context, it is also worth noting that many of the materials used for casting walls or floors shrink while hardening into a wall or floor. This shrinking occurs also in. the thickness direction of the wall or floor and as such clamps the rib or flange of the inlet-pipe.

However, this flange or rib also provides a barrier against transport of fluids along the outside of the sealing conduit from, one side of the wall or floor to the other side of the wall or floor.

In the description below, more of the rib or flange advantages will be pointed out, in relation to the shrinkage.

In an embodiment of a system according to the invention, the position of the rib coincides with the position of the shoulder. This also allows for a stronger construction of the pipe-inlet, which effectively means that the pipe-inlet can be made of thinner material without sacrificing on the impact strength needed to withstand the casting of the castable material into the formwork onto the pipe-inlet.

In an embodiment of a system according to the invention, the system further comprises a sealing device for inserting in the inlet-end of the pipe-inlet. This allows for optimal matching of the dimensions of the sealing device and the dimensions of the inlet-end of the pipe-inlet.

In an embodiment of a system according to the invention, the system further comprises a pipe for fittingly coupling to the coupling-end of the pipe-inlet, the inner surface of the pipe being smoother than the outer surface of the pipe. This also provides for optimal matching of the pipe in the pipe-inlet, so that a transition from the pipe to the pipe-inlet will be optimal. The pipe is preferably a pipe produced by an injection moulding process. The pipe has preferably a length between 180 and 250 mm. The advantages of these preferred embodiments will be discussed in the more detailed description below, with reference to the drawing.

In an embodiment of a system according to the invention, the system further comprises a connector piece for connecting two pipes. This is particularly advantageous where the system is provided as a kit of parts and wherein the actual pipes provided are preferably as short as possible. A longer pipe can then be obtained by placing the connector piece between two shorter pipes.

The system comprises a fixation piece fixable at a predetermined position against an inside of a panel of formwork in which the wall is to be casted. The predetermined position corresponds to a position where the pipe-inlet of the sealable conduit is intended to be once the wall is produced. The fixation piece has an outer surface dimensioned such that it fits into the inlet-end of the pipe-inlet and then establishes a fixed positional relationship between the fixation piece and the pipe-inlet until the fixation piece is removed out of the pipe-inlet. This allows for positioning the sealable conduit in the formwork before the castable material is poured into the formwork. It also

allows for easily removing the formwork once the wall or floor is formed and the sealable conduit is embedded in that wall or floor. The panels of the formwork to which the fixation pieces are fixed will simply be manipulated such that the fixation pieces will be pulled out of the respective inlet-ends of the pipe-inlets.

The invention is also related to a method for embedding a sealable conduit for ducting a tube or cable in a wall or floor which is to be produced by a casting process.

The invention will further be explained with reference to the drawing in which:
Figure 1 shows in cross section a part of a system in accordance with the invention;
Figure 2 shows in cross section an embodiment of a system in accordance with the invention, in use;
Figure 3a shows in cross section a part of a system in accordance with the invention;
Figure 3b shows the embodiment shown in Figure 3a in an assembled condition;
Figure 4a shows part of an embodiment of a system according to the invention;
Figure 4b shows part of the embodiment shown in Figure 4a in an assembled condition;
Figure 5a shows the part of a system according to the invention as shown in Figure 1;
Figure 5b shows a side view of a part of an embodiment of a system according to the invention;
Figure 5c shows part of the embodiment shown in Figure 5b, viewed in axial direction;
Figure 6 shows an embodiment, of a system according to the invention in an assembled condition;
Figure 7 shows an embodiment of a system according to the invention as embedded in a wall and after removal of the formwork;
Figure 8a shows a part of a system according to the invention as embedded in a wall, after removal of the formwork, and after insertion of a pipe and sealing devices;
Figure 8b shows a part of Figure 8a in more detail; and
Figure 9 shows an embodiment of a system according to the invention.

In the drawing like parts are referred to by like references.

The invention is directed to a system for embedding a sealable conduit for ducting a tube or cable in a wall or floor which is to be produced by a casting process. Such a wall or floor can for instance be made of concrete. A sealable conduit needs to be embedded in such a wall or floor, to allow for tubes or cables to be passed through the wall or floor in an uncomplicated way. It obviates, for instance, a need for drilling a conduit in a concrete wall. The tube or cable to be passed through the sealable conduit is in diameter much smaller than the cross-sectional dimensions of the conduit itself. It is also possible that more tubes or more cables, or even a combination of tubes and cables, are passed through the wall or floor via the conduit. The remaining space in the conduit needs to be sealed off, so that fluids such as water and gas cannot flow freely through the conduit from one side of the wall or floor to the other side of the wall or floor. Such conduits may be embedded in inner walls or floors, but also in walls or floors between an inside of a construction and the outside of that construction as exposed to atmospheric conditions.

In the following description, references are often made to a wall. However, it is to be understood that the invention can equally be used for embedding a sealable conduit in a floor. Although reference will be made to a tube or a cable, it is to be understood that also a small pipe (i.e. smaller than the conduit) or other cylindrical devices for transporting physical phenomena are embraced by the term "tube or cable".

For embedding a conduit in a wall which is to be produced by a casting process, it is necessary to have the sealable conduit positioned within the formwork into which the castable material is poured for forming the wall. Although the castable material will often be a form of concrete, in principle, the invention is usable in combination with any other castable material, such as a hardenable plastic, a freezable material such as water, or artificial wood.

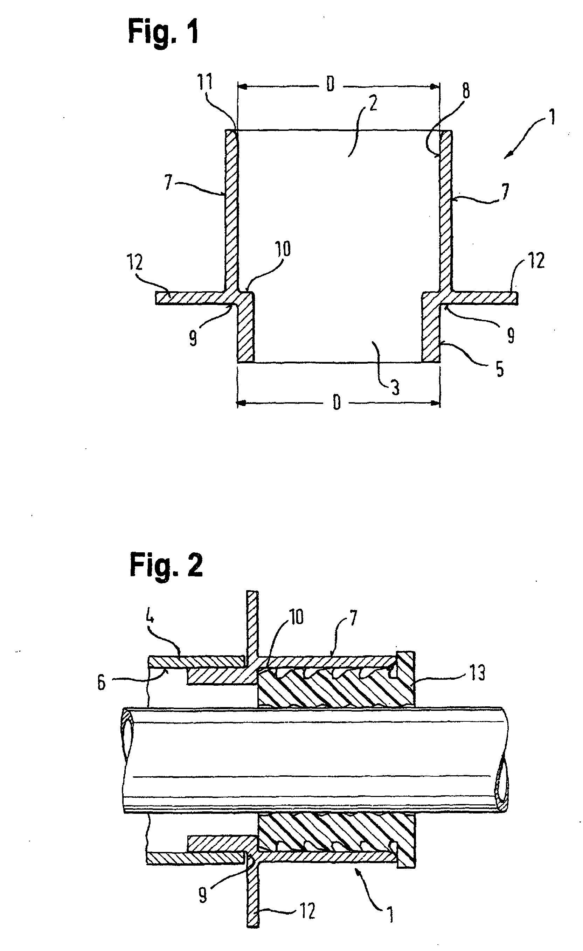

A system according to the invention comprises at least one pipe-inlet 1 shown in Figure 1, having an inlet-end 2 and a coupling-end 3 for fittingly coupling to a pipe 4 (see Figure 2) by insertion of the coupling-end 3 into the pipe 4. The inner cross-sectional dimensions of the inlet-end 2 corresponds to the outer cross-sectional dimensions of the coupling-end 3, such that this relationship facilitates coupling to a pipe 4 having the same inner cross-sectional dimensions as the inlet-end 2. Often these cross-sectional dimensions can be expressed in terms of diameters of respectively the inlet-end (internally), the coupling-end (externally) and the pipe (internally).

The coupling-end 3 is provided with an annular surface 5 for fittingly receiving there against an annular inner surface 6 of the pipe 4. The annular contact surface 5 is smooth compared with an outer surface 7 of the inlet-end 2. Such a smooth annular contact surface 5 of the coupling-end 3 facilitates insertion of the coupling-end 3 into pipe 4. Furthermore, the fitting of the coupling-end 3 into pipe 4 will be such that the transition from the pipe-inlet to the pipe is similar to a transition from a pipe-inlet to a pipe which are integrally connected.

The pipe-inlet 1 is further provided with an inner surface 8 which is smooth compared with an outer surface 7 of the inlet-end 2. This facilitates a smooth insertion of a sealing device into the pipe-inlet and further facilitates well-matching contact between the inner surface 8 of the inlet-end and the outer surface of the sealing device, establishing a good sealing.

The coupling-end 3 is further provided with a stopper 9 for defining the maximum overlap in axial direction between the coupling-end 3 and the pipe 4 into which the coupling-end 3 is inserted. This allows for accurately establishing the necessary length of the pipe 4 so as to end up with a conduit having a length which corresponds to the thickness of the wall in which it is meant to be embedded. As will be explained further below in more detail, it is even possible to account for the shrinkage of the wall in the thickness direction.

As shown in the exemplary drawing, the inlet-end 2 has a cylindrical cross section having a diameter which corresponds to the diameter of the pipe 4. Even if in a design, the sealable conduit was meant to be an ordinary pipe extending through the wall across the thickness thereof, no major redesigning is required should it be decided that the pipe ought to be replaced by a system according to the invention.

A sealing device suited for the design with only the ordinary pipe, will still be suitable in case that ordinary pipe is replaced by a system according to the invention.

The inlet-end 2 is internally provided with a shoulder 10 for inhibiting the insertion of a sealing device too deep into the inlet-end 2. Once a sealing device is inserted into the inlet-end, and resistance offered by shoulder 10 is felt, there will not be any need to further insert such a sealing device into inlet-end 2, for instance by using a hammer which may otherwise cause damage to the sealing device and/or to the inlet-end. Furthermore, if the length in axial direction of the sealing device and the position of shoulder 10 in the inlet-end 2 are well-matched, then the sealing device will not need to be compressed in axial direction, therewith avoiding premature end of sealing integrity, and thus the lifetime, of such a sealing device. Finally, the shoulder will facilitate alignment of segmental parts of a sealing device, as these will all abut the shoulder, leading to equal insertion of these parts and a good match of their interfaces.

The inlet-end 2 is preferably provided with a rim which is rounded off at an inside of the rim 11.

Preferably, shoulder 10 coincides with a transition from the inlet-end 2 to the coupling-end 3.

The pipe-inlet 1 is further ideally externally provided with a rib or flange 12 which extends in a transverse direction of the pipe-inlet 1 for locking the pipe-inlet 1 in the wall or floor. Preferably, the position of the rib 12 coincides with the position of the shoulder 10. This allows for a simple design of a pipe-inlet 1 according to the invention and a relatively strong transition from the inlet-end 2 to the coupling-end 3. The rib or flange 12 will also seal off any gap that may exist between the outer wall of the conduit and the casted material of which the wall or floor is made (into which the conduit is, in use, embedded). However, interestingly, such a rib or flange 12 also helps in avoiding the formation of such a gap.

The inventor gained the insight that such a rib or flange inhibits movement of the casted material at the outer side of the inlet-pipe in a thickness-direction of the wall or floor during the hardening of the casted material. Such movement, which would otherwise occur in the length or axial direction of the inlet pipe due to shrinkage of the casted material, leads to poor or no adhesion of the casted material to the inlet-pipe. This is believed to explain why often plastic conduits embedded in a wall of casted material can easily be pushed or pulled out of such a wall once the casted material has hardened.

The rib or flange not only locks itself into the casted material, but also "locks" the casted material to an extent at a position along the inlet-end of the inlet-pipe in that it prevents movement of that casted material in the thickness-direction of the wall.

Above, it has been indicated that, preferably, the annular contact surface 5 of the coupling-end 3 is smooth compared with an outer surface 7 of the inlet-end 2. Even more preferable is that the outer surface 7 of the inlet-end 2 has a surface which is rough to an extend that it facilitates sufficient friction between the casted wall or floor material during hardening so that the wall or floor material adheres to the outer surface 7 of the inlet-end 2. The roughness depends to a large extent of the type of material used for casting the wall or floor. A person skilled in the art will, on the basis of routine experiments, be able to work out which roughness is sufficient. The rough surface may also comprise a pattern of grooves, indents or recesses, provided on the outer surface of the inlet-end, provided that this does not affect the impact strength, about which more details will follow below.

As shown in Figure 2, an embodiment of a system according to the invention may further comprise a sealing device 13 for insertion in the inlet-end 2 of the pipe-inlet 1.

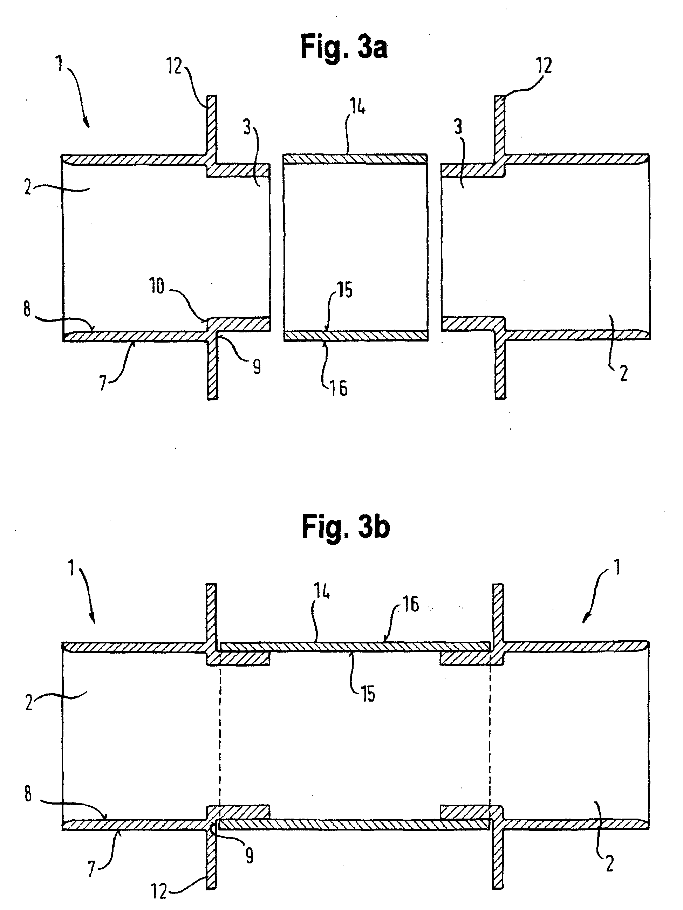

As shown in Figure 3a and Figure 3b, the system may further comprises a pipe 14 for fittingly coupling the coupling-end 3 of the pipe-inlet 1. Such a pipe 14 has preferably an inner diameter which corresponds to the outer diameter of the coupling-end 3 for coupling the pipe to the coupling-end 3, in a fitting fashion. The pipe diameter further corresponds to the inner diameter of inlet-end 2. Ideally, the inner surface 15 of pipe 14 is smooth relatively to the outer surface 16 of pipe 14.

Above, it has also been indicated that in embodiments of the system which include a pipe for fittingly coupling to the coupling-end 3 of the pipe-inlet 2, preferably the inner surface of the pipe 4 is smooth compared to the outer surface of the pipe. Even more preferable is that the outer surface of the pipe has a surface which is rough to an extent that it facilitates sufficient friction between the casted wall or floor during hardening so that the wall or floor adheres to the outer surface of the pipe. Also here it applies that the roughness depends to a large extent on the type of material used for casting the wall or floor. A person skilled in the art will, on the basis of routine experiments, be able to work out which roughness is sufficient. The rough surface may also here comprise a pattern of grooves, indents or recesses, provided on the outer surface of the inlet-end, provided that this does not affect the impact strength, about which more details follow below.

While Figure 3a shows two pipe-inlets 1 and a pipe 14 in an unassembled condition. Figure 3B shows these two pipe-inlets 1 and a pipe 14 in an assembled condition. The length in axial direction of the entire system as shown in Figure 3B, will often be chosen such that it corresponds to the thickness to the wall or floor in which the system is meant to be embedded as a sealable conduit for ducting a tube or cable. The stoppers 9 of the pipe-inlets 1 play an important role in the establishment of the required length of the pipe 14. Preferably the pipe 14 has a length between 180 and 250 mm, more preferably, 200 mm. A long pipe is likely to bend through somewhat, under the impact and weight of the casted material. Short pipes having a length of about 200 mm are less likely to bend through.

Should the thickness of the wall or floor require a longer pipe between pipe-inlets 1, then it is possible that the system includes a connector piece 17 for connecting to two pipes 14. Two pipes 14 connected by a connector piece 17 provide a stiffer conduit than one long pipe. Such a stiffer conduit also ensures that the tubes or cables can more easily be passed through the conduit. Furthermore, connector piece 17 may be such that it allows for slight adjustment of the total length, if so desired. It may even be the case that overlap between pipes 14 and this connector piece "absorbs" the shrinkage in the thickness-direction of the wall or floor.

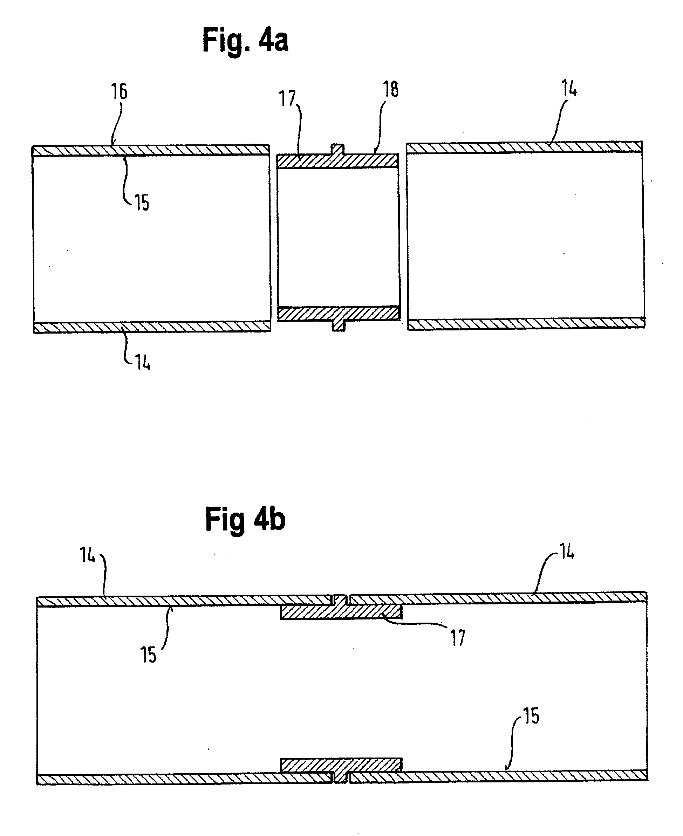

Here it applies that the outer surface 18 of connector piece 17 is relatively smooth, compared to an outer surface 16 of pipe 14. This facilitates the connecting of the pipes 14. While Figure 4a shows two pipes 14 and a connector piece 17 in an unassembled condition, Figure 4b shows these two pipes 14 and a connector piece 17 in an assembled condition.

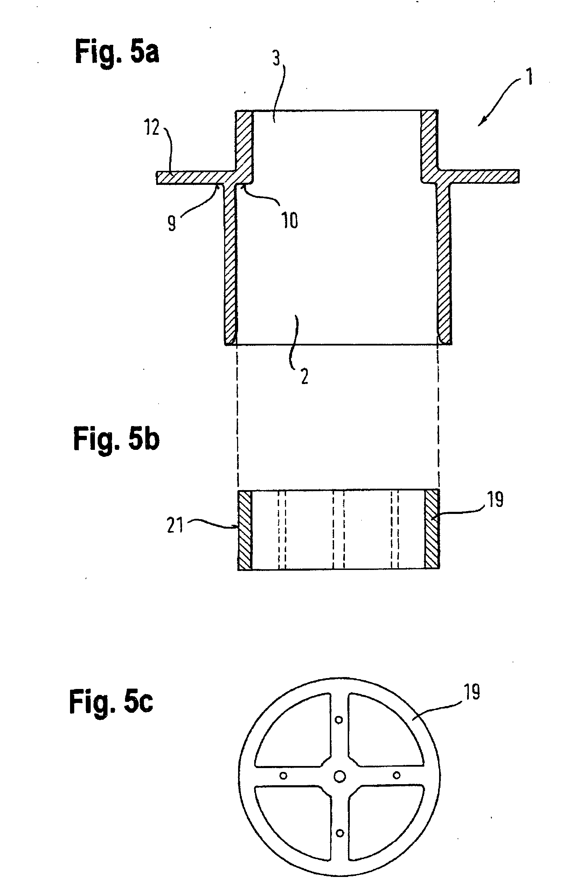

Figure 5a shows again a pipe-inlet 1, now positioned in relation to a fixation piece 19 as shown in Figure 5b in a view which is perpendicular to the axial direction of such a fixation piece 19. As shown, the outer diameter of the fixation piece 19 corresponds to the inner diameter of the inlet-end 2 for coupling the inlet-end and the fixation piece 19 so as to establish a fixed positional relationship between them.

Figure 5c shows the fixation piece 19 in axial direction. The fixation piece 19 is fixable at a predetermined position against an inside of one panel of formwork in which the wall or floor is to be casted. The predetermined position corresponds to a position where the pipe-inlet 1 of the sealable conduit is intended to be once the wall is produced. In general, the fixation piece 19 has an outer surface dimensioned such that it fits into the inlet-end 2 of pipe-inlet 1 and then establishes a fixed positional relationship between the fixation piece 19 and the pipe-inlet 1. The outer surface may be an annular surface. This fixed positional relationship is maintained until the fixation piece 19 is removed out of the inlet-end 2 of pipe-inlet 1. The fixation piece 19 is provided with holes through which bolts or screws can be applied for fixing the fixation piece against an inside of a panel 20 of the formwork. The outer surface 21 of the fixation piece 19 has preferably a smooth surface, as compared to, for instance, the outer surface of the inlet-end. The fixation piece 19 is preferably such that, once fixed at the predetermined position against an inside of one panel of the formwork, the pipe-inlet "mounted" thereto will have its axial direction perpendicular to the wall or floor surface in which it will be embedded.

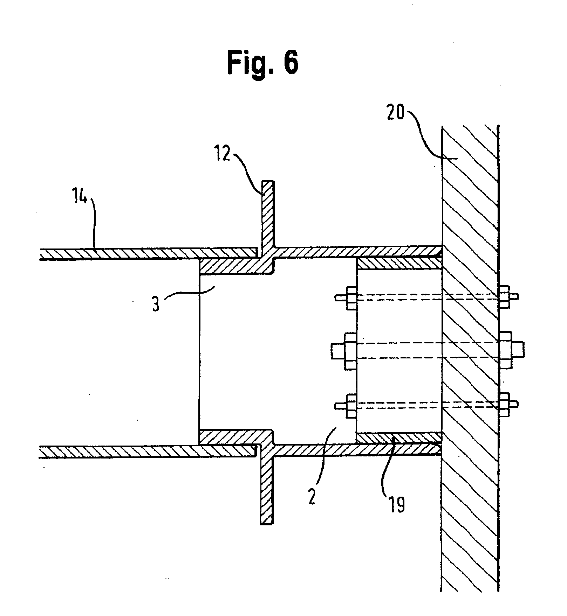

Figure 6 shows the fixation piece 19 bolted against the inside of a panel 20 of formwork in which a wall or floor is to be casted. The inlet-end 2 of pipe-inlet 1 is surrounding the fixation piece 19 establishing a close contact between the inner surface 8 of inlet-end 2 and outer surface 21 of fixation piece 19. A fixed positional relationship between the fixation piece 19 and the pipe-inlet 1 is established.

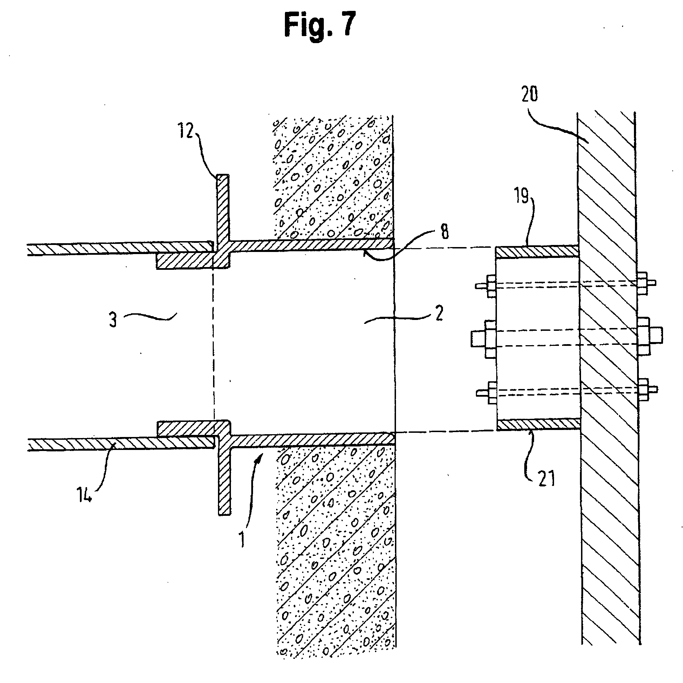

In this way it is possible to position the sealable conduit within the formwork in which the wall or floor is to be casted. Once the wall or floor has hardened, the formwork can be removed, meaning that panel 20 will be moved such that fixation piece 19 is removed out of the inlet-end 2 of pipe-inlet 1. The scalable conduit is then embedded in the wall or floor at the predetermined position. Figure 7 shows this result.

The following method is proposed for embedding a sealable conduit for ducting a tube or cable in a wall or floor which is to be casted by a casting process. Provide a pipe-inlet 1 and a panel 20 of formwork in which the wall or floor is to be casted. Provide a fixation piece which is fixable at a predetermined position against an inside of the panel 20 of the formwork. The fixation piece 19 has an outer surface 21 dimensioned such that it fits into the inlet-end of the pipe-inlet and then establishes a fixed positional relationship between the fixation piece 19 and the pipe-inlet 1. The outer surface is preferably annular. This fixed positional relationship is maintained until the fixation piece 19 is removed out of the inlet-end 2 of the pipe-inlet. When the fixation piece is fixed at the predetermined position, which corresponds to a position where the pipe-inlet of the scalable conduit is intended to be once the wall or floor is produced, the fixation piece 19 and the pipe-inlet 1 are fitted such that the fixed positional relationship is indeed established. The pipe-inlet 1 is preferably as described above. Preferably, a pipe having a predetermined length is provided, for instance by "on site" cutting a pipe at that predetermined length. The predetermined length is preferably chosen such that after connecting the pipe and the pipe-inlet, or the pipe and two pipe-inlets, (one on each end of the pipe), the overall length of the sealable conduit therewith obtained, corresponds to the thickness of the wall or floor in which the sealable conduit is to be embedded. The pipe is fittingly coupled to the coupling-end of the respective pipe-inlet 1. It is possible to allow somewhat for the shrinkage of the casted material in the thickness-direction of the wall by placing the pipe and the pipe-inlets such that the pipes do as yet not overlap to the maximum extent as defined by the stopper 9, with the coupling end 3.

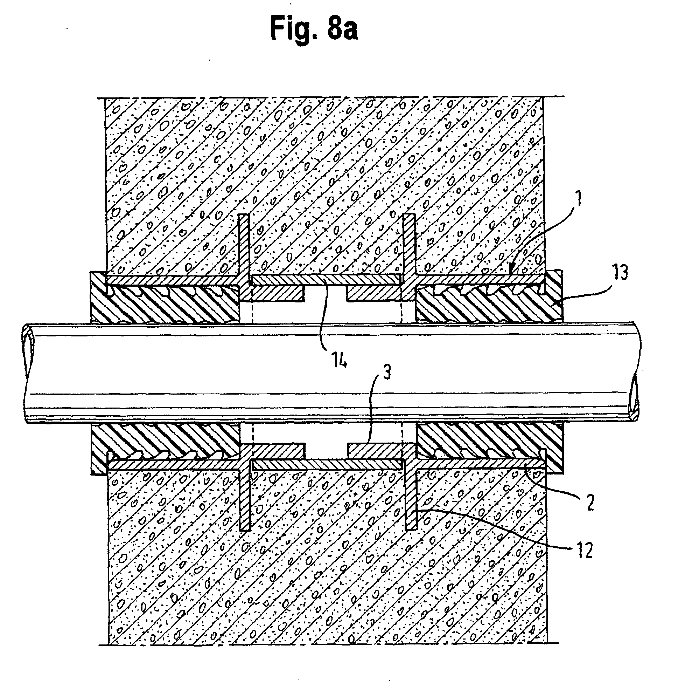

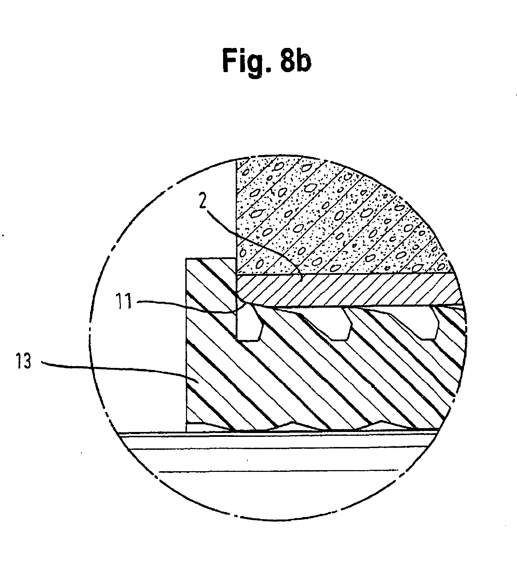

For ending up with a sealable conduit having a pipe-inlet 1 on each end and as embedded in a wall, a fixation piece 19 can also be fixed at a predetermined position against an inside of another panel 20 of the formwork in which the wall or floor is to be casted. If needed, use can be made of more pipes 4 and a connection piece 17 as shown in Figures 4a and 4b. Once the sealable conduit is positioned between panels 20 of formwork in which the wall or floor is to be casted, the material of which the wall or floor is to be produced can be casted into the formwork. After solidification of that castable material, most likely concrete, the formwork can be removed. The sealable conduit is then embedded in the wall or floor. It is then possible to pass through the sealable conduit one or more cables and/or tubes and to insert sealing devices 13 such as plugs shown in Figure 8a. Figure 8b shows a part of Figure 8a in more detail.

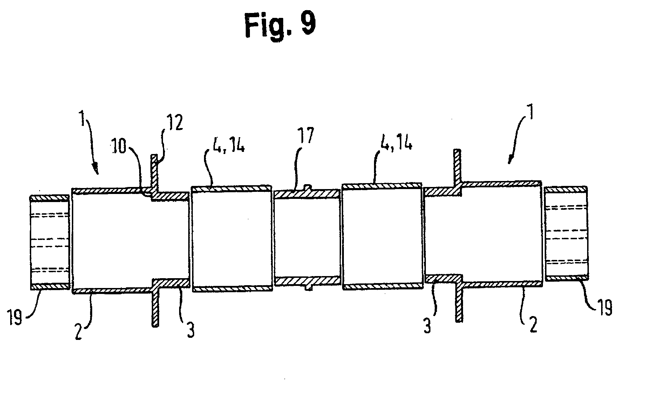

Apart from the sealing device, the pipe-inlet 1, and preferably also other parts of a system according to the invention, are made of a high-impact strength plastic, preferably of Acrylonitrite Butadiene Styrene (ABS) which is strong and also known to have a low absorption of water. Other materials with similar properties may also be suitable. Preferably all parts, apart from the sealing device, are made by an injection moulding process. This allows for providing the smooth and rough surface in one single process step. The alternative of first extruding a pipe would require further machining, making the process overall more costly. The relatively rough surfaces are ideally such that these provide a good interaction with the castable material, so as to improve the embedding in the wall or floor. Figure 9 shows the parts of the system which can be made of the material described above and by the process mentioned above.
All parts of the system, apart from the sealing device, need to be of a "high-impact-strength" quality, given that the castable material may be poured into the formwork from a large height, relative to the position of the sealable conduit.

These parts should be regarded as fitting-elements which can be fitted together such that no gas leakage can occur along contact surfaces between these parts. This will avoid unwanted leakage of gas and avoid formations of critical amounts and pressures of gas at undesired positions, as such avoiding the risks of a gas explosion.

The system may be available as a kit of parts with or without pipes have an adjustable length. The pipe may also be non-straight, i.e. have a L-shape or any other shape. It is even possible to have joint-pipes, like a T-section. The system allows also for use with pipes which have mutually different diameters at the ends. As indicated above, also conduits having a non-circular cross-section can be formed using embodiments of a system according to the invention. All such variants are understood to fall within the framework of the invention, as defined by the appended claims.

## Claims

1. System for embedding a sealable conduit for ducting a tube or cable in a wall or floor which is to be produced by a casting process after positioning the sealable conduit within formwork into which the castable material is poured for forming the wall or floor, wherein the system comprises at least one pipe-inlet (1) having a smooth inlet-end (2) for receiving a sealing device (13) and a coupling-end (3) for fittingly coupling to a pipe (4; 14) by insertion of the coupling-end into the pipe, wherein the inner cross-sectional dimensions of the inlet-end corresponds to the outer cross-sectional dimensions of the coupling-end for coupling to a pipe having the same inner cross-sectional dimensions as the inlet-end, wherein the system further comprises a fixation piece (19) fixable at a predetermined position against an inside of one panel (20) of the formwork in which the wall or floor is to be casted, the fixation piece being provided with holes through which bolts or screws can be applied for fixing the fixation piece against an inside of a panel of the formwork, the predetermined position corresponding to a position where the pipe-inlet of the sealable conduit is intended to be once the wall or floor is produced, the fixation piece having an outer surface (21) dimensioned such that it fits into the inlet-end of the pipe-inlet and then establishes a fixed positional relationship between the fixation piece and the pipe-inlet until the fixation piece is removed out of the pipe-inlet.

2. System according to claim 1, wherein the coupling-end is provided with an annular contact surface (5) for fittingly receiving there against an annular inner surface (6) of the pipe, the annular contact surface being smooth compared with an outer surface of the inlet-end.

3. System according to any one of claim 1 or 2, wherein the pipe-inlet is provided with an inner surface (8) which is smooth compared with an outer surface (9) of the inlet-end.

4. System according to any one of the claims 1-3, wherein the coupling-end is provided with a stopper (9) for defining the maximum overlap in axial direction between the coupling-end and a pipe into which the coupling-end is inserted.

5. System according to any one of the previous claims,
wherein the inlet-end of the pipe-inlet has a cylindrical cross-section.

6. System according to any one of the previous claims,
wherein the inlet-end of the pipe-inlet has a rim (11) which is rounded-off at an inside of the rim.

7. System according to any one of the previous claims,
wherein the inlet-end of the pipe-inlet is internally provided with a shoulder (10) for inhibiting insertion of a sealing device too deep into the inlet-end.

8. System according to claim 7, wherein the shoulder coincides with a transition from the inlet-end to the coupling-end.

9. System according to any one of the previous claims,
wherein the pipe-inlet is externally provided with a rib or flange (12) which extends in a transverse direction of the pipe-inlet for locking the pipe-inlet in the wall or floor.

10. System according to claim 8 and 9 or 7 and 9, wherein the position of the rib or flange coincides with the position of the shoulder.

11. System according to any one of the previous claims,
wherein the system further comprises a sealing device (13) for insertion in the inlet-end of the pipe-inlet.

12. System according to any one of the previous claims,
wherein the system further comprises a pipe (4; 14) for fittingly coupling to the coupling-end of the pipe-end, the inner surface (6; 15) of the pipe being smooth compared to the outer surface (16) of the pipe.

13. System according to claim 12, wherein the pipe is a pipe produced by an injection moulding process.

14. System according to claim 12 or 13, wherein the pipe has a length of between 180 and 250 mm.

15. System according to claim 13 or 14, wherein the system further comprises a connector piece (17) for connecting two pipes.

16. Method for embedding a sealable conduit of the system according to any one of the previous claims, the method comprising:
o providing a pipe-inlet (1) having an inlet-end (2);
o providing a panel (20) of formwork in which the wall or floor is to be casted;
o providing a fixation piece (19) which is fixable at a predetermined position against an inside of the panel of the formwork, the fixation piece being provided with holes through which bolts or screws can be applied for fixing the fixation piece against an inside of a panel of a formwork, the fixation piece having an outer surface (21) dimensioned such that it fits into the inlet-end of the pipe-inlet and then establishes a fixed positional relationship between the fixation piece and the pipe-inlet until the fixation piece is removed out of the pipe-inlet;
o fixing the fixation piece at the predetermined position; and
o fitting the fixation piece and the pipe-inlet such the fixed positional relationship is established.

17. Method according to claim 16, wherein the method further comprises
o providing another identical pipe-inlet (1);
o providing a pipe (4; 14) having a predetermined length; and
o fittingly coupling the pipe to the coupling-ends (3) of the pipe-inlets.

18. Method according to claim 16 and 17, wherein the method further comprises
o repeating the steps outlined in claim 16 for a second panel (20) of the formwork for the another identical pipe-inlet;
o positioning the panels such that the sealable conduit is formed between the first and the second panel of the formwork

19. Method according to claim 16 or 18, wherein the method further comprises
o casting the material of which the wall is to be produced into the formwork; and after hardening of that material,
o removing the formwork.

## Patentansprüche

1. System zum Einbetten eines abdichtbaren Kanals zum Führen eines Rohrs oder Kabels in einer Wand oder einem Boden, der mittels Gussverfahren herzustellen ist, nachdem der abdichtbare Kanal innerhalb einer Schalung positioniert wurde, in welche die Gießmasse zum Formen der Wand oder des Bodens gegossen wird, wobei das System mindestens einen Leitungseinlass (1) mit einem glatten Einlassende (2) zum Aufnehmen einer Abdichtungseinrichtung (13) und einem Kopplungsende (3) zum passend Koppeln an eine Leitung (4; 14) aufweist, indem das Kopplungsende in die Leitung eingeführt wird, wobei die inneren Querschnittsabmessungen des Einlassendes den äußeren Querschnittabmessungen des Kopplungsendes zum Koppeln an eine Leitung mit denselben inneren Querschnittsabmessungen wie das Einlassende entsprechen, wobei das System ferner ein Befestigungsstück (19) aufweist, das bei einer vorgegebenen Position an einer Innenseite eines Paneels (20) der Schalung, in welcher die Wand oder der Boden gegossen wird, befestigt werden kann, wobei das Befestigungsstück mit Löchern versehen ist, durch welche Bolzen oder Schrauben zum Befestigen des Befestigungsstücks an einer Innenseite eines Paneels der Schalung eingesetzt werden können, wobei die vorgegebene Position einer Position entspricht, bei welcher der Leitungseinlass des abdichtbaren Kanals vorgesehen ist, wenn der Wand oder der Boden hergestellt ist, wobei das Befestigungsstück eine äußere Fläche (21) aufweist, die so dimensioniert ist, dass sie in das Einlassende des Leitungseinlasses hineinpasst und dann eine feste Lagebeziehung zwischen dem Befestigungsstück und dem Leitungseinlasses schafft, bis das Befestigungsstück aus dem Leitungseinlass entfernt wird.

2. System nach Anspruch 1, bei dem das Kopplungsende mit einer ringförmigen Kontaktfläche (5) versehen ist, zum passend dagegen Aufnehmen einer ringförmigen inneren Fläche (6) der Leitung, wobei die ringförmige Kontaktfläche im Vergleich mit einer äußeren Fläche des Einlassendes glatt ausgebildet ist.

3. System nach Anspruch 1 oder 2, bei dem der Leitungseinlass mit einer inneren Fläche (8) versehen ist, die im Vergleich mit einer äußeren Fläche (9) des Einlassendes glatt ausgebildet ist.

4. System nach einem der Ansprüche 1 bis 3, bei dem das Kopplungsende mit einem Stoppelement (9) versehen ist, zum Festlegen der maximalen Überlappung in axialer Richtung zwischen dem Kopplungsende und einer Leitung, in die das Kopplungsende eingeführt ist.

5. System nach einem der vorstehenden Ansprüche, bei dem das Einlassende des Leitungseinlasses einen zylindrischen Querschnitt aufweist.

6. System nach einem der vorstehenden Ansprüche, bei dem das Einlassende des Leitungsendes einen Rand (11) aufweist, der bei einer Innenseite des Rands abgerundet ist.

7. System nach einem der vorstehenden Ansprüche, bei dem das Einlassende des Leitungsendes intern mit einer Schulter (10) versehen ist, zum Hemmen einer zu tiefen Einführung einer Abdichtungseinrichtung in das Einlassende.

8. System nach Anspruch 7, bei dem die Schulter und ein Übergang von dem Einlassende zu dem Kopplungsende zusammenfallen.

9. System nach einem der vorstehenden Ansprüche, bei dem das Einlassende extern mit einer Rippe oder einem Flansch (12) versehen ist, der sich in einer Transversalrichtung des Leitungseinlasses erstreckt, zum in der Wand oder dem Boden Verriegeln des Leitungseinlasses.

10. System nach Anspruch 8 und 9 oder 7 und 9, bei dem die Position der Rippe oder des Flansches mit der Position der Schulter übereinstimmt.

11. System nach einem der vorstehenden Ansprüche, bei dem das System ferner eine Abdichtungseinrichtung (13) zum Einführen in das Einlassende des Leitungseinlasses aufweist.

12. System nach einem der vorstehenden Ansprüche, bei dem das System ferner eine Leitung (4; 14) zum passend Koppeln mit dem Kopplungsende des Leitungsendes aufweist, wobei die innere Fläche (6; 15) der Leitung im Vergleich zu der äußeren Fläche (16) der Leitung glatt ausgebildet ist.

13. System nach Anspruch 12, bei dem die Leitung eine Leitung ist, die mittels Spritzgießverfahren hergestellt wurde.

14. System nach Anspruch 12 oder 13, bei dem die Leitung eine Länge zwischen 180 und 250 mm aufweist.

15. System nach Anspruch 13 oder 14, wobei das System ferner ein Verbindungsstück (17) zum Verbinden von zwei Leitungen aufweist.

16. Verfahren zum Einbetten eines abdichtbaren Kanals des Systems nach einem der vorstehenden Ansprüche, wobei das Verfahren umfasst:
- Bereitstellen eines Leitungseinlasses (1) mit einem Einlassende (2);
- Bereitstellen eines Paneels (20) einer Schalung, in der die Wand oder der Boden zu gießen ist;
- Bereitstellen eines Befestigungsstücks (19), das bei einer vorgegebenen Position an einer Innenseite des Paneels der Schalung befestigbar ist, wobei das Befestigungsstück mit Löchern versehen ist, durch welche Bolzen oder Schrauben zum Befestigen des Befestigungsstücks an einer Innenseite eines Paneels einer Schalung eingesetzt werden können, wobei das Befestigungsstück eine äußere Fläche (21) aufweist, die so dimensioniert ist, dass sie in das Einlassende des Leitungseinlasses hineinpasst und dann eine feste Lagebeziehung zwischen dem Befestigungsstück und dem Leitungseinlass schafft, bis das Befestigungsstück aus dem Leitungseinlass entfernt wird;
- Befestigen des Befestigungsstücks bei der vorgegebenen Position; und
- Befestigen des Befestigungsstücks und des Leitungseinlasses, sodass die feste Lagebeziehung geschaffen wird.

17. Verfahren nach Anspruch 16, wobei das Verfahren ferner umfasst:
- Bereitstellen eines weiteren identischen Leitungseinlasses (1);
- Bereitstellen einer Leitung (4; 14) mit einer vorgegebenen Länge; und
- passend Koppeln der Leitung mit den Kopplungsenden (3) der Leitungseinlässe.

18. Verfahren nach Anspruch 16 und 17, wobei das Verfahren ferner umfasst:
- Wiederholen der in Anspruch 16 beschriebenen Schritte für ein zweites Paneel (20) der Schalung für den weiteren identischen Leitungseinlass;
- Positionieren der Paneele, sodass der abdichtbare Kanal zwischen dem ersten und dem zweiten Paneel der Schalung ausgebildet wird.

19. Verfahren nach Anspruch 16 oder 18, wobei das Verfahren ferner umfasst:
- Eingießen des Materials, aus dem die Wand herzustellen ist, in die Schalung; und danach Härten dieses Materials,
- Entfernen der Schalung.

## Revendications

1. Système d'insertion d'une conduite scellable de gainage d'un tube ou d'un câble dans un mur ou un plancher qui doit être fabriqué par un processus de coulée après le positionnement de la conduite scellable à l'intérieur d'un coffrage dans lequel le matériau coulable est versé pour former le mur ou le plancher, où le système comprend au moins une entrée de tuyau (1) ayant une extrémité d'entrée lisse (2) destinée à recevoir un dispositif de scellage (13) et une extrémité de couplage (3) destinée à être couplée par ajustement à un tuyau (4 ; 14) par l'insertion de l'extrémité de couplage dans le tuyau, où les dimensions de la section transversale intérieure de l'extrémité d'entrée correspondent aux dimensions de la section transversale extérieure de l'extrémité de couplage destinée à être couplée à un tuyau ayant les mêmes dimensions de section transversale intérieure que celles de l'extrémité d'entrée, où le système comprend en outre une pièce de fixation (19) pouvant être fixée à une position prédéterminée contre la partie intérieure d'un panneau (20) du coffrage dans lequel le mur ou le plancher doit être coulé, la pièce de fixation étant pourvue de trous à travers lesquels des boulons ou des vis peuvent être appliqués pour fixer la pièce de fixation contre la partie intérieure d'un panneau du coffrage, la position prédéterminée correspondant à une position dans laquelle l'entrée de tuyau de la conduite scellable est censée se trouver une fois que le mur ou le plancher est fabriqué, la pièce de fixation ayant une surface extérieure (21) dimensionnée de sorte qu'elle s'ajuste dans l'extrémité d'entrée de l'entrée de tuyau et qu'elle établisse par la suite une relation de position fixe entre la pièce de fixation et l'entrée de tuyau jusqu'à ce que la pièce de fixation soit retirée de l'entrée de tuyau.

2. Système selon la revendication 1, dans lequel l'extrémité de couplage est pourvue d'une surface de contact annulaire (5) contre laquelle une surface intérieure annulaire (6) du tuyau est reçue par ajustement, la surface de contact annulaire étant lisse par rapport à une surface extérieure de l'extrémité d'entrée.

3. Système selon l'une quelconque de la revendication 1 ou 2, dans lequel l'entrée de tuyau est pourvue d'une surface intérieure (8) qui est lisse par rapport à une surface extérieure (9) de l'extrémité d'entrée.

4. Système selon l'une quelconque des revendications 1 à 3, dans lequel l'extrémité de couplage est pourvue d'une butée (9) pour définir le chevauchent maximal dans une direction axiale entre l'extrémité de couplage et un tuyau dans lequel l'extrémité de couplage est insérée.

5. Système selon l'une quelconque des revendications précédentes, dans lequel l'extrémité d'entrée de l'entrée de tuyau présente une section transversale cylindrique.

6. Système selon l'une quelconque des revendications précédentes, dans lequel l'extrémité d'entrée de l'entrée de tuyau présente un rebord (11) qui est arrondi au niveau de la partie intérieure du rebord.

7. Système selon l'une quelconque des revendications précédentes, dans lequel l'extrémité d'entrée de l'entrée de tuyau est pourvue, à l'intérieur, d'un épaulement (10) pour empêcher une insertion trop profonde d'un dispositif de scellage dans l'extrémité d'entrée.

8. Système selon la revendication 7, dans lequel l'épaulement coïncide avec une transition de l'extrémité d'entrée à l'extrémité de couplage.

9. Système selon l'une quelconque des revendications précédentes, dans lequel l'entrée de tuyau est pourvue, à l'extérieur, d'une nervure ou d'une bride (12) qui s'étend dans une direction transversale de l'entrée de tuyau pour bloquer l'entrée de tuyau dans le mur ou le plancher.

10. Système selon les revendications 8 et 9 ou 7 et 9, dans lequel la position de la nervure ou de la bride coïncide avec la position de l'épaulement.

11. Système selon l'une quelconque des revendications précédentes, dans lequel le système comprend en outre un dispositif de scellage (13) destiné à être inséré dans l'extrémité d'entrée de l'entrée de tuyau.

12. Système selon l'une quelconque des revendications précédentes, dans lequel le système comprend en outre un tuyau (4 ; 14) destiné à être couplé par ajustement à l'extrémité de couplage de l'extrémité de tuyau, la surface intérieure (6 ; 15) du tuyau étant lisse par rapport à la surface extérieure (16) du tuyau.

13. Système selon la revendication 12, dans lequel le tuyau est un tuyau fabriqué par un processus de moulage par injection.

14. Système selon la revendication 12 ou 13, dans lequel le tuyau a une longueur comprise entre 180 et 250 mm.

15. Système selon la revendication 13 ou 14, dans lequel le système comprend en outre une pièce de raccordement (17) destinée à raccorder deux tuyaux.

16. Procédé d'insertion d'une conduite scellable du système selon l'une quelconque des revendications précédentes, le procédé comprenant le fait :
de fournir une entrée de tuyau (1) ayant une extrémité d'entrée (2) ;
de fournir un panneau (20) de coffrage dans lequel le mur ou le plancher doit être coulé ;
de fournir une pièce de fixation (19) qui peut être fixée à une position prédéterminée contre la partie intérieure du panneau du coffrage, la pièce de fixation étant pourvue de trous à travers lesquels des boulons ou des vis peuvent être appliqués pour fixer la pièce de fixation contre une partie intérieure d'un panneau d'un coffrage, la pièce de fixation ayant une surface extérieure (21) dimensionnée de sorte qu'elle s'ajuste dans l'extrémité d'entrée de l'entrée de tuyau et qu'elle établisse par la suite une relation de position fixe entre la pièce de fixation et l'entrée de tuyau jusqu'à ce que la pièce de fixation soit retirée de l'entrée de tuyau ;
de fixer la pièce de fixation à la position prédéterminée ; et
d'ajuster la pièce de fixation et l'entrée de tuyau de sorte que la relation de position fixe soit établie.

17. Procédé selon la revendication 16, dans lequel le procédé comprend en outre le fait
de fournir une autre entrée de tuyau identique (1) ;
de fournir un tuyau (4 ; 14) ayant une longueur prédéterminée ; et
de coupler par ajustement le tuyau aux extrémités de couplage (3) des entrées de tuyau.

18. Procédé selon les revendications 16 et 17, dans lequel le procédé comprend en outre le fait
de répéter les étapes décrites dans la revendication 16 pour un deuxième panneau (20) du coffrage pour l'autre entrée de tuyau identique ;
de positionner les panneaux de sorte que la conduite scellable soit formée entre les premier et deuxième panneaux du coffrage.

19. Procédé selon la revendication 16 ou 18, dans lequel le procédé comprend en outre
la coulée du matériau à partir duquel le mur doit être fabriqué dans le coffrage ; et après le durcissement de ce matériau,
l'enlèvement du coffrage.
